# EUROPEAN PATENT SPECIFICATION

(11) **EP 2 369 961 B1**
(45) Date of publication and mention of the grant of the patent: **04.09.2013**
(21) Application number: 09778809.5
(22) Date of filing: 02.10.2009
(51) Int. Cl.: A47J 31/40

(54) **FOOD PROCESSING APPARATUS AND METHOD**
VORRICHTUNG UND VERFAHREN ZUR VERARBEITUNG VON NAHRUNGSMITTELN
APPAREIL ET PROCÉDÉ DE TRANSFORMATION DES ALIMENTS

(30) Priority: 15.10.2008 GB 0818884; 31.12.2008 US 141922 P
(43) Date of publication of application: 05.10.2011
(73) Proprietor: Nestec S.A., 1800 Vevey (CH)
(72) Inventor: PLANET, Janet, T., Los Angeles, CA 90014 (US); BARWICK, Darryl, Richard, Marysville, OH 43040-1579 (US)
(74) Representative: Gundel, Isabelle
(86) International application number: PCT/EP2009/007083
(87) International publication number: WO 2010/043313

(56) References cited:
- WO-A-2004/041043
- WO-A-2007/135597
- WO-A-2008/049222
- US-A- 4 015 780
- US-A- 5 871 619

## Description

This invention relates to a food processing apparatus, particularly one in which discrete morsels of food product are dispensed. The invention also relates to a food processing method in which discrete morsels of food product are dispensed.

The use of discrete morsels of food product in food processing methods is well known. The morsels typically provide a distinct variation in taste and texture to a final product. For example, morsels of chocolate may be added to a semi-solid cake mixture, prior to the baking process. The morsels of chocolate maintain at least some of their form and texture following the baking process.

Examples of final products which may contain morsels of food product include baked biscuits, cookies and cakes, confectionary products and frozen deserts.

In known food processing apparatus, discrete morsels of food product are transferred on conveyors, such as endless belts or vibrating conveyors, to provide a reasonably consistent flow of the morsels without damaging them. These conveyors, however, are physically large and can be inefficient. While not generally a problem for large scale food processing apparatus, the space requirement of conveyors in smaller installations is disadvantageous. Smaller installations may, for example, be provided in retail outlets.

Known conveyors may also require significant testing and adjustment throughout their working life.

WO2004/04103 describes a beverage machine for dispensing beverages, including a conveyance system for the dispensing of particulate material. A conveyance system comprising a threaded screw member encased in a hollow shell, which is rotated to urge particulate material upwardly towards a distal end of the conveyor member to a particulate chute member for directing the particulate substance to a desired location or station.

According to a first aspect of the invention, there is provided a food processing apparatus comprising a device for dispensing discrete morsels of food product, the device comprising: a hopper for receiving the morsels, the hopper having a discharge chute for discharging the morsels by means of gravity; and an auger having a drive end for rotatably driving the auger and a discharge end for dispensing the morsels, the helical flighting of the auger communicating with the chute of the hopper, wherein the device is arranged such that the auger is inclined at a non-vertical angle, such that the discharge end of the auger is higher than the drive end of the auger, and wherein the discharge end of the auger is provided with a mechanical agitator for agitating morsels.

Contrary to the expectations of those skilled in the art, it has been found that an auger fed by a hopper having a chute may be successfully used to transfer discrete morsels of food product. Surprisingly, it has also been found that providing the auger inclined at a non-vertical angle, according to the invention, allows for transfer of the morsels with no more than negligible levels of damage or break-up of the morsels.

The invention may also provide increased efficiency and a more consistent flow of the product, as compared to known techniques for transferring discrete morsels of food product. Without being bound by theory, it is believed that these advantages result from the inclination of the auger, and its operation in an upwardly transferring direction.

The chute of the hopper may be arranged to be substantially perpendicular to the axis of the auger. The chute may be four sided, with one pair of opposing walls being parallel and another pair of opposing walls converging towards the auger. It has been found that such a chute arrangement is particularly well adapted for supplying the morsels to the flighting of the auger without blockages or product damage. Without being bound by theory, it is believed that blockages in the chute are avoided by providing the chute with the pair of parallel opposing walls.

The discharge end of the auger is provided with a mechanical agitator for agitating morsels. This agitator may take the form of an axial shaft provided with a radial arm. The axial shaft may be an extension of a shaft of the auger. The mechanical agitator serves to separate and disperse the morsels, and is particularly advantageous when used with morsels having a tendency to stick together.

For best results, the auger may be inclined at an angle of 30 to 60 degrees, preferably 40 to 50 degrees, and most preferably about 45 degrees, to the vertical.

The auger may be at least partially enclosed by a sleeve to provide for efficient transfer of the morsels. In another arrangement, however, the auger may be entirely surrounded by the morsels supplied by the chute of the hopper.

The drive end of the auger may be provided with spinner plate for sealing an end of the sleeve. In this way, ingress of contaminants at the drive end of the auger may be avoided, as well as leakage of the morsels. The drive end of the auger may be coupled to drive means, such as a electric motor, by a coupling element. Suitable coupling elements will be known to those skilled in the art.

The food processing apparatus may further comprise an extrusion head for extruding a semi-solid mixture of food product. In this case, the device for dispensing the morsels may be arranged to feed the morsels to the extrusion head, for example via a second chute.

According to a second aspect of the invention, there is provided a food processing method comprising dispensing discrete morsels of food product using the food processing apparatus described above.

The morsels of food product may be confections, such as chocolate, or fruit or nuts. The morsels may have a maximum diameter of 10 mm, preferably 8 mm, and most preferably 5 mm. Herein, a reference to a diameter of a discrete morsel of food product is a reference to its maximum dimension, regardless of the shape of the morsel.

The pitch of the auger flighting may be at least double, preferably three times, and most preferably at least four times, the maximum diameter of the morsels of food product. The radial width of the auger flighting (i.e. the depth of the helical thread) may be at least double, preferably three times, and most preferably at least four times, the maximum diameter of the morsels of food product.

A specific embodiment of the invention will now be described, by way of example only, with reference to the accompanying drawings in which:
Figure 1 is a schematic view of a food processing apparatus according to the invention;
Figure 2 is a perspective view of an element of the apparatus shown in Figure 1; and
Figure 3, 4 and 5 are side, end and top views, respectively, of the element shown in Figure 2.

The invention provides a food processing apparatus comprising a device for dispensing discrete morsels of food product. The device comprises a hopper for receiving the morsels, the hopper having a discharge chute for discharging the morsels by means of gravity. The device also comprises an auger having a drive end for rotatably driving the auger and a discharge end for dispensing the morsels, the helical flighting of the auger communicating with the chute of the hopper. The device is arranged such that the auger is inclined at a non-vertical angle, such that the discharge end of the auger is higher than the drive end of the auger, and the discharge end of the auger is provided with a mechanical agitator for agitating morsels. The invention also provides a food processing method comprising dispensing discrete morsels of food product using the food processing apparatus.

Herein, a reference to morsels is a reference to discrete morsels of food product, typically having a minimum diameter of 1.5 mm, preferably 2 mm, and most preferably 2.5 mm. Such morsels include a wide variety of relatively small, irregular pieces of edible material that are generally solid, but may alternatively be semi-solid. Examples of morsels include small pieces of chocolate, fruit or nuts.

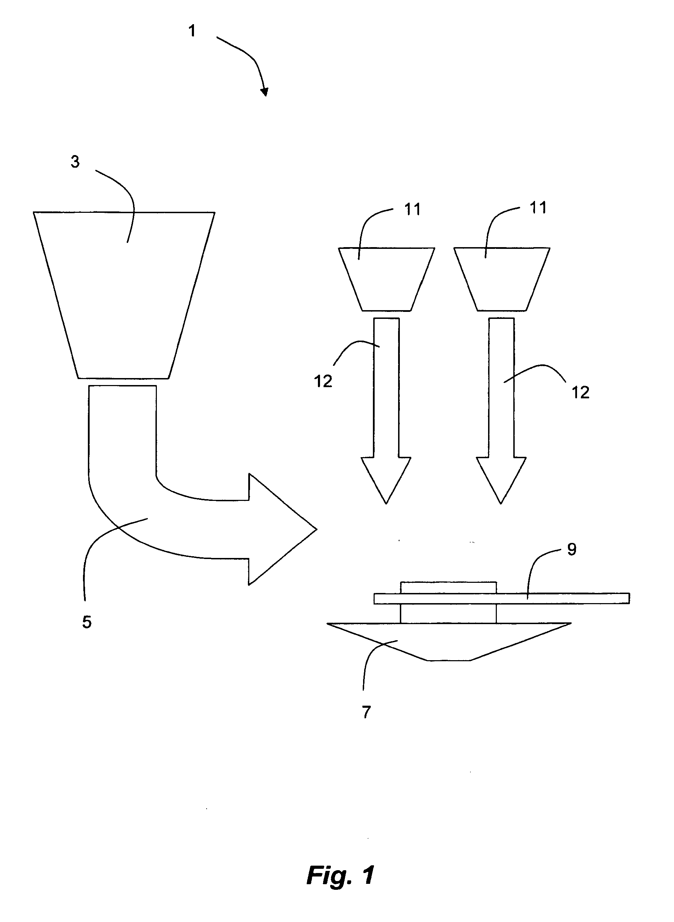

Figure 1 is a schematic view of the food processing apparatus 1. The apparatus 1 comprises a main hopper 3 which is fed with a semi-solid cake mixture under a positive pressure. The cake mixture is typically a homogeneous mixture comprising flour, a sweetening agent, a bonding agent, fats and a leavening agent.

The positive pressure under which the main hopper 3 is fed causes the cake mixture to flow through a tube 5 and into an extrusion head 7 provided with a valve 9. The valve 9 can be switched on and off to control the flow of the cake mixture through the extrusion head 7.

The apparatus 1 also comprises a plurality of dispensing devices 11 for dispensing discrete morsels of food product, via chutes 12 into the extrusion head 7. The dispensing devices 11 are arranged to dispense the morsels so that they are randomly distributed in the cake mixture which flows through the extrusion head 7. The concentration of morsels in the cake mixture can be varied using the dispensing devices 11, as will be explained below.

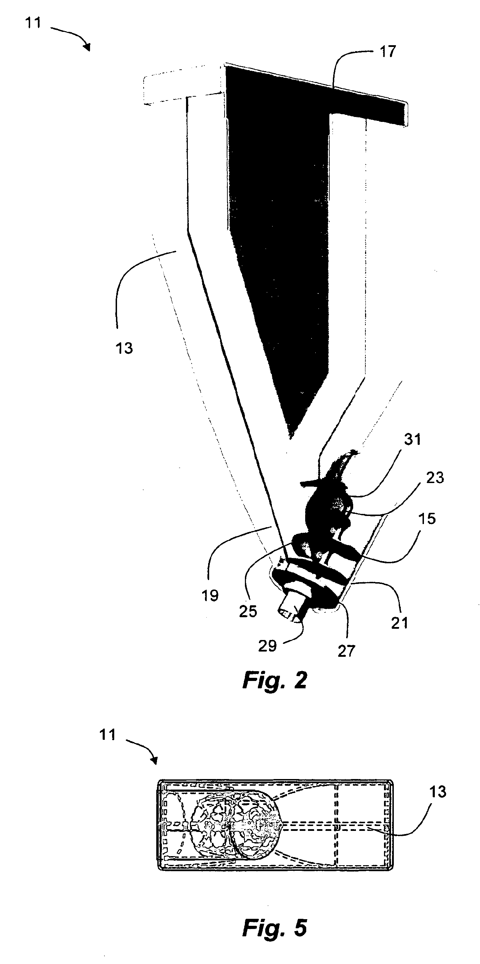

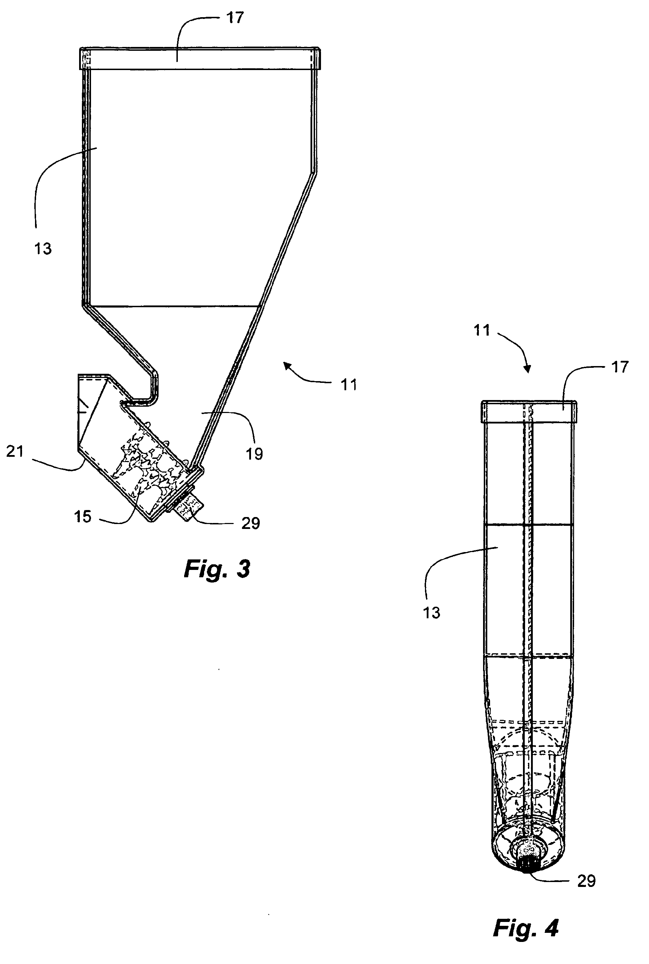

Figures 2 to 5 illustrate, in more detail, one of the dispensing devices 11 shown in Figure 1. With reference to the Figures, the dispensing device 11 comprises a hopper 13 and an auger 15.

In the device, the hopper 13 is arranged above the auger 15. The hopper 13 is a moulded component formed of a food grade plastics material defining a body in which discrete morsels may be stored prior to being transferred by the auger 15. The hopper 13 is provided with a lid 17. The hopper 13 is typically formed of a transparent plastics material so that the type and quantity of its contents can be readily observed by an operator.

An upper portion of the hopper 13 has a rectangular cross section, the minor side of which is significantly larger than the maximum diameter of morsels it contains. The lower portion of the hopper 13 is arranged in the form of a chute 19. Within the chute 19, one pair of opposing walls are arranged to be parallel and another pair of opposing walls converge in a direction towards the auger 15.

At the bottom of the chute 19, a sleeve 21 is integrally moulded with the hopper 13, within which sleeve the auger 15 is received. A bottom portion of the chute 19 communicates with the auger 15 through a side opening in the integrally moulded sleeve 21.

The configuration of the hopper 13 is such that the converging sides of the chute 19 are symmetrical about a vertical plane, and the integrally moulded sleeve 21 is inclined at an angle of 45 degrees to the vertical.

The auger 15, which is received in the sleeve 21 comprises a stainless steel shaft 23 onto which is moulded a helical flighting 25 formed of a food grade plastics material. At one end of the flighting 25, the auger 15 is provided with a spinner plate 27 and a coupling element 29. The spinner plate 27 abuts against a flange provided at a lower end of the sleeve 21 to locates the auger 15 in the axial direction and to seals the hopper 13 to prevent ingress of contaminants or egress of morsels. The drive element 29 couples the auger 15 to the output shaft of an electric motor (not shown) for rotatably driving the auger 15.

At the other end of the flighting 25, the auger 15 is provided with a mechanical agitator 31. The mechanical agitator 31 takes the form of an extension of the shaft 23, an end of which is bent at 45 degrees to the axis of the shaft 23.

The pitch of the auger flighting is at least double the maximum diameter of the morsels of food product. Similarly, the radial width of the auger flighting (i.e. the depth of the helical thread) is at least double the maximum diameter of the morsels of food product.

In use of the apparatus 1, the semi-solid cake mixture is fed from the main hopper 3 to the extrusion head 7 under a positive pressure. At the same time, the augers 15 of the dispensing devices 11 are rotatably driven by respective electric motors (not shown) to dispense morsels of different food products from each of the hoppers 13 into the extrusion head 7, via the chutes 12. Consequently, the extruded mixture is provided with randomly distributed morsels of different food products.

The particular morsels which are included in the extruded mixture can be controlled by switching the electric motors which drive the augers 15 on and off. Similarly, the rate at which the morsels are dispensed by the dispensing devices 11 can be controlled by adjusting the speed at which the augers 15 of the devices 11 are rotated.

The particular arrangement of the dispensing devices 11, particularly the upward inclination of the augers 15, substantially avoids damage to the morsels of food product, minimises bridging of morsels across the flighting 25 of the augers 15, reduces loads on the electric motors driving the augers 15, and provides a consistent flow of morsels to the extrusion head 7.

A specific embodiment of the invention has been described in detail. Those skilled in the art will appreciate that various changes may be made to the embodiment without departing from the scope of the invention, which scope is defined by the claims.

For example, an apparatus for extruding cake mixture has been described. However, according to the invention, the apparatus could adapted for extruding other food products such as iced deserts. Moreover, the extrusion head of the apparatus could be omitted, with the morsels dispensed from the dispensing devices instead being fed into a mixing vessel.

## Claims

1. A food processing apparatus [1] comprising a device [11] for dispensing discrete morsels of food product, the device comprising:
a hopper [13] for receiving the morsels, the hopper having a discharge chute [19] for discharging the morsels by means of gravity; and
an auger [15] having a drive end for rotatably driving the auger and a discharge end for dispensing the morsels, the helical flighting [25] of the auger communicating with the chute [19] of the hopper,
wherein the device is arranged such that the auger is inclined at a non-vertical angle, such that the discharge end of the auger is higher than the drive end of the auger, **characterised in that** the discharge end of the auger is provided with a mechanical agitator [31] for agitating morsels.

2. A food processing apparatus according to claim 1, wherein the chute of the hopper is substantially perpendicular to the axis of the auger.

3. A food processing apparatus according to any preceding claim, wherein the auger is inclined at an angle of 30 to 60 degrees to the vertical.

4. A food processing apparatus according to any preceding claim, wherein the auger is at least partially enclosed by a sleeve [21].

5. A food processing apparatus according to claim 4, wherein the drive end of the auger is provided with spinner plate [27] for sealing an end of the sleeve.

6. A food processing apparatus according to any preceding claim, further comprising an extrusion head [7] for extruding a semi-solid mixture of food product, wherein the device for dispensing the morsels is arranged to feed the extrusion head.

7. A food processing apparatus according to claim 6, further comprising a chute [12] for transferring the morsels from the discharge end of the auger to the extrusion head.

8. A food processing method comprising dispensing discrete morsels of food product using a food processing apparatus according to any preceding claim.

9. A food processing method according to claim 8, wherein the morsels of food product are confections.

10. A food processing method according to claim 8 or 9, wherein the pitch of the auger flighting is at least double the mean diameter of the morsels of food product.

11. A food processing method according to any of claims 8 to 10, wherein the radial width of the auger flighting is at least double the mean diameter of the morsels of food product.

## Patentansprüche

1. Vorrichtung [1] zur Nahrungsmittelverarbeitung mit einer Einrichtung [11] zur Abgabe einzelner Häppchen eines Nahrungsmittelproduktes, wobei die Vorrichtung Folgendes umfasst:
einen Trichter [13] zur Aufnahme der Häppchen, wobei der Trichter eine Abgabeschütte [19] zur Abgabe der Häppchen mittels Schwerkraft aufweist; und
eine Förderschnecke [15] mit einem Antriebsende zum Drehantrieb der Förderschnecke und einem Austrittsende zur Abgabe der Häppchen, wobei der Spiralgewindegang [25] der Förderschnecke mit der Schütte [19] des Trichters in Verbindung steht,
wobei die Einrichtung derart angeordnet ist, dass die Förderschnecke in einem nicht senkrechten Winkel geneigt ist, so dass das Austrittsende der Förderschnecke höher als das Antriebsende der Förderschnecke liegt, **dadurch gekennzeichnet, dass** das Austrittsende der Förderschnecke mit einer mechanischen Rühreinrichtung [31] zum Bewegen der Häppchen versehen ist.

2. Vorrichtung zur Nahrungsmittelverarbeitung gemäß Anspruch 1, wobei die Schütte des Trichters im Wesentlichen senkrecht zur Achse der Förderschnecke ist.

3. Vorrichtung zur Nahrungsmittelverarbeitung gemäß einem der vorhergehenden Ansprüche, wobei die Förderschnecke in einem Winkel von 30 bis 60 Grad zur Senkrechten geneigt ist.

4. Vorrichtung zur Nahrungsmittelverarbeitung gemäß einem der vorhergehenden Ansprüche, wobei die Förderschnecke zumindest teilweise von einer Hülse [21] umschlossen ist.

5. Vorrichtung zur Nahrungsmittelverarbeitung gemäß Anspruch 4, wobei das Antriebsende der Förderschnecke mit einer Schleuderplatte [27] zur Abdichtung eines Endes der Hülse versehen ist.

6. Vorrichtung zur Nahrungsmittelverarbeitung gemäß einem der vorhergehenden Ansprüche, weiterhin mit einem Extruderkopf [7] zum Extrudieren einer halbfesten Mischung des Nahrungsmittelproduktes, wobei die Einrichtung zur Abgabe der Häppchen so angeordnet ist, dass sie den Extruderkopf beschickt.

7. Vorrichtung zur Nahrungsmittelverarbeitung gemäß Anspruch 6, weiterhin mit einer Schütte [12] zum Überführen der Häppchen von dem Abgabeende der Förderschnecke zu dem Extruderkopf.

8. Verfahren zur Nahrungsmittelverarbeitung, das die Abgabe einzelner Häppchen eines Nahrungsmittelproduktes unter Einsatz einer Vorrichtung zur Nahrungsmittelverarbeitung gemäß einem der vorhergehenden Ansprüche umfasst.

9. Verfahren zur Nahrungsmittelverarbeitung gemäß Anspruch 8, wobei die Häppchen des Nahrungsmittelproduktes aus Konfekt bestehen.

10. Verfahren zur Nahrungsmittelverarbeitung gemäß Anspruch 8 oder 9, wobei die Steigung des Gewindegangs der Förderschnecke mindestens das Doppelte des mittleren Durchmessers der Häppchen des Nahrungsmittelproduktes beträgt.

11. Verfahren zur Nahrungsmittelverarbeitung gemäß einem der Ansprüche 8 bis 10, wobei die radiale Breite des Gewindegangs der Förderschnecke mindestens das Doppelte des mittleren Durchmessers der Häppchen des Nahrungsmittelproduktes beträgt.

## Revendications

1. Un appareil pour la préparation d'aliments [1] comprenant un dispositif [11] pour distribuer des morceaux individuels de produit alimentaire, le dispositif comprenant :
une trémie [13] destinée à recevoir les morceaux, la trémie ayant une goulotte d'évacuation [19] pour évacuer les morceaux à l'aide de la gravité ; et une vis sans fin [15] comportant une extrémité d'entraînement pour entraîner en rotation la vis sans fin et une extrémité de décharge pour distribuer les morceaux, les filets hélicoïdaux [25] de la vis sans fin communicant avec la goulotte [19] de la trémie,
dans lequel le dispositif est agencé de manière à ce que la vis sans fin soit inclinée à un angle non vertical, de sorte que l'extrémité de décharge de la vis sans fin soit plus haute que son extrémité d'entraînement, **caractérisé en ce que** l'extrémité de décharge de la vis sans fin est pourvue d'un agitateur mécanique [31] pour agiter les morceaux.

2. Un appareil pour la préparation d'aliments selon la revendication 1, dans lequel la goulotte de la trémie est sensiblement perpendiculaire à l'axe de la vis sans fin.

3. Un appareil pour la préparation d'aliments selon l'une des revendications précédentes, dans lequel la vis sans fin est inclinée à un angle de 30 à 60 degrés par rapport à la verticale.

4. Un appareil pour la préparation d'aliments selon l'une des revendications précédentes, dans lequel la vis sans fin est au moins en partie entourée par un manchon [21]

5. Un appareil pour la préparation d'aliments selon la revendication 4, dans lequel l'extrémité d'entraînement de la vis sans fin est pourvue d'une plaque rotative [27] pour sceller une extrémité du manchon.

6. Un appareil pour la préparation d'aliments selon l'une des revendications précédentes, qui comprend, en outre, une tête d'extrusion [7] pour extruder un mélange semi-solide de produit alimentaire, dans lequel le dispositif pour distribuer les morceaux est agencé de manière à alimenter la tête d' extrusion.

7. Un appareil pour la préparation d'aliments selon la revendication 6, qui comprend, en outre, une goulotte [12] pour transférer les morceaux de l'extrémité de décharge de la vis sans fin vers la tête d'extrusion.

8. Un procédé pour la préparation d'aliments comprenant la distribution de morceaux individuels de produit alimentaire en utilisant un appareil pour la préparation d'aliment selon l'une des revendications précédentes.

9. Un procédé pour la préparation d'aliments selon la revendication 8, dans lequel les morceaux de produit alimentaire sont des confiseries.

10. Un procédé pour la préparation d'aliments selon la revendication 8 ou 9, dans lequel le pas du filet de la vis sans fin est au moins le double du diamètre moyen des morceaux de produit alimentaire.

11. Un procédé pour la préparation d'aliments selon l'une des revendications 8 à 10, dans lequel la largeur radiale du filet de la vis sans fin est au moins le double du diamètre moyen des morceaux de produit alimentaire.
